# EUROPÄISCHE PATENTSCHRIFT

(11) **EP 3 023 325 B1**
(45) Veröffentlichungstag und Bekanntmachung des Hinweises auf die Patenterteilung: **01.01.2020**
(21) Anmeldenummer: 15196001.0
(22) Anmeldetag: 24.11.2015
(51) Int. Cl.: B62K 19/34, B60B 27/02, B62K 19/38, B62K 25/02, B60B 27/00

(54) **FAHRRADKOMPONENTE MIT EINEM ENDANSCHLAG UND ENDANSCHLAG**
BICYCLE COMPONENT HAVING AN END STOP AND END STOP
COMPOSANT DE VÉLO COMPRENANT UNE BUTÉE ET BUTÉE

(30) Priorität: 24.11.2014 DE 102014117145
(43) Veröffentlichungstag der Anmeldung: 25.05.2016
(73) Patentinhaber: DT Swiss AG, 2504 Biel (CH)
(72) Erfinder: Walthert, Martin, CH-3270 Aarberg (CH); Spahr, Stefan, 2543 Lengnau (CH); Haas, Simon, CH-4533 Riedholz (CH)
(74) Vertreter: BSB Patentanwälte Schütte & Engelen Partnerschaft mbB

(56) Entgegenhaltungen:
- DE-A1- 4 120 209
- US-B1- 7 581 795

## Beschreibung

Die vorliegende Erfindung betrifft eine Fahrradkomponente mit einem Nabengehäuse für ein Laufrad eines wenigstens teilweise muskelbetriebenen Fahrrades sowie einen Endanschlag für eine Nabe eines wenigstens teilweise muskelbetriebenen Fahrrads und ein Zweirad mit einem Rahmen, einer Gabel und einem wenigstens teilweise muskelbetriebenen Antrieb. Dabei weisen die Fahrradkomponente und das Zweirad wenigstens einen Endanschlag auf, um das Laufrad eines Zweirads an den Ausfallenden zu fixieren.

Im Stand der Technik sind verschiedenste Fahrräder bekannt geworden, bei denen die Laufräder über unterschiedliche Arten an den Ausfallenden bzw. der Gabel oder dem Rahmen des Fahrrads bzw. des Zweirads befestigt werden. Üblich sind beispielsweise Schnellspanner, bei denen die Nabe eines Laufrades in der Regel eine hohle Nabenachse aufweist, durch die zur Befestigung ein Schnellspanner durchgesteckt wird, um das Laufrad bei Bedarf schnell demontieren und wieder montieren zu können. Naben für Schnellspanner haben in der Regel eine feststehende Achse, deren Achsstummel in die Ausfallenden des Fahrrads eingeschoben werden und dort mittels des Schnellspanners befestigt werden. Es hat sich gezeigt, dass Naben mit einem größeren Achsdurchmesser eine höhere Stabilität erlauben. Zur Befestigung solcher Naben mit einem größeren Innendurchmesser der feststehenden Achse werden Endanschläge auf die Enden der Achse aufgesteckt, wobei die Endanschläge auf der Außenseite einen Achsstummel mit kleinerem Außendurchmesser zur Verfügung stellen, womit derartige Naben an konventionellen Ausfallenden aufgenommen werden können.

Die DE 41 20 209 A1 offenbart ein Zweirad für den Saalradsport mit einer Hinterradnabe mit großem Hülsendurchmesser, wobei an jedem Nabenende eine Kragenhülse auf die Achse aufgesteckt ist, welche jeweils die Spannkraft von dem Innenring des Lagers auf das Ausfallende des Rahmens bzw. der Gabel übertragen. Der Außendurchmesser der Kragenhülse ist auf der Nabenseite jeweils größer als auf der Rahmen- bzw. Gabelseite.

Die US 7,581,795 B1 zeigt eine Fahrradnabe mit einer Gewindeachse. Dabei werden auf die Achse Muttern geschraubt und verkontert, um die zur Lagerung der Nabenhülse vorgesehenen Lager zu fixieren.

Seit einigen Jahren werden zunehmend Naben für Steckachsensysteme eingesetzt, wobei die Steckachse an einem Ende ein Gewinde aufweist, mit denen sie in ein Innengewinde an dem Ausfallende der Gabel oder des Rahmens eingeschraubt wird. Derartige Steckachsen erlauben eine höhere Steifigkeit des Systems.

Bei allen Arten von Laufrädern von Zweirädern werden zunehmend Scheibenbremsen eingesetzt, bei denen die Bremsscheibe drehfest mit dem Nabengehäuse verbunden wird. Als ein De-facto-Standard hat sich das "Centerlock"-System von Shimano erwiesen, bei dem auf der Außenseite des Nabengehäuses eine unrund ausgestaltete Scheibenaufnahme zur drehfesten Aufnahme der Bremsscheibe vorgesehen ist. An einem Ende des Nabengehäuses ist ein umlaufender Absatz mit einem Innengewinde vorgesehen, in welches ein Befestigungsring, ein sogenannter Centerlock-Lockring eingeschraubt wird, um die Bremsscheibe axial zu sichern. Derartige Standard-Bremsscheiben und Standard-Fixierringe weisen Standardabmessungen auf, sodass solche Bremsscheiben an Naben unterschiedlicher Hersteller montiert werden können.

Zur Erhöhung der Steifigkeit der Aufnahme des Laufrades wurde die Anlagefläche der Achse oder des Endanschlags an dem Ausfallende eines Rahmens vergrößert. Um einen Fixierring für beispielsweise eine Centerlock-Bremsscheibe an eine vormontierte Nabe anbringen zu können, muss deshalb der maximale Durchmesser des Endanschlags kleiner sein als der freie Innendurchmesser eines derartigen Fixierringes. Für Centerlock-Bremsscheiben bedeutet dies, dass der Außendurchmesser eines Endanschlags knapp 26 mm nicht überschreiten kann. Würde der Außendurchmesser des Endanschlags größer werden, so müsste vor der Montage der Bremsscheibe zunächst der Endanschlag demontiert, die Bremsscheibe aufgesetzt, der Fixierring angebracht und schließlich der Endanschlag wieder montiert werden. Derartige Demontage- und Montageschritte sind bei der Serienproduktion unerwünscht, da sie zum Einen Aufwand verursachen und zum Anderen die Fehlermöglichkeiten erheblich vergrößern. Werden derartige Naben falsch montiert, so können auf die Hersteller des Fahrrads und gegebenenfalls auch der Naben Schadensersatzansprüche wegen Produkthaftung zukommen. Dabei stellt sich dann auch die Frage, ob der Hersteller des Fahrrads, der die Nabe für die Bremsscheibenmontage zunächst demontiert und anschließend wieder zusammensetzt oder aber der Hersteller der Nabe dafür verantwortlich ist. Außerdem ist, wie erwähnt, jeder zusätzliche Schritt mit zusätzlichen Kosten verbunden.

Es ist deshalb die Aufgabe der vorliegenden Erfindung, eine Fahrradkomponente mit einem Endanschlag und ein Zweirad mit einer solchen Fahrradkomponente sowie einen Endanschlag zur Verfügung zu stellen, womit wenigstens ein Teil der zuvor beschriebenen Nachteile überwunden werden kann.

Diese Aufgabe wird gelöst durch eine Fahrradkomponente mit den Merkmalen des Anspruchs 1, durch einen Endanschlag mit den Merkmalen des Anspruchs 10. Bevorzugte Weiterbildungen der Erfindung sind Gegenstand der Unteransprüche. Weitere Vorteile und Merkmale der vorliegenden Erfindung ergeben sich aus der allgemeinen Beschreibung und der Beschreibung der Ausführungsbeispiele.

Eine erfindungsgemäße Fahrradkomponente weist ein Nabengehäuse für ein Laufrad eines wenigstens teilweise muskelbetriebenen Fahrrads auf. Das Nabengehäuse ist über wenigstens eine Lagereinrichtung drehbar gelagert. An wenigstens einem Ende des Nabengehäuses ist ein Endanschlag angeordnet. Der Endanschlag weist einen inneren Anschlag mit einer inneren Anschlagfläche zur Überleitung einer Klemmkraft auf die Lagereinrichtung und einen äußeren wenigstens einen Teil der Klemmkraft übertragenden Anschlag mit einer äußeren Anschlagfläche auf. Der Endanschlag umfasst eine erste und wenigstens eine zweite die Klemmkraft übertragende Anschlagkomponente. Die zweite Anschlagkomponente umgibt die erste Anschlagkomponente über wenigstens einen Überlappungsabschnitt radial. Insbesondere besteht der Endanschlag aus einer ersten und wenigstens einer zweiten die Klemmkraft übertragenden Anschlagkomponente. Der äußere Anschlag weist eine größere Anschlagfläche und/oder einen größeren Außendurchmesser auf als der innere Anschlag.

Die erfindungsgemäße Fahrradkomponente hat viele Vorteile. Ein erheblicher Vorteil der erfindungsgemäßen Fahrradkomponente besteht darin, dass der Anschlag aus zwei wenigstens einen Teil der Klemmkraft übertragenden Anschlagkomponenten besteht. Dadurch kann der Endanschlag in zwei separate Teile aufgeteilt werden, die jeweils Kraft übertragen und zum Beispiel unterschiedliche Außenabmessungen aufweisen. Dadurch ist es möglich, die Fahrradkomponente - wie insbesondere eine Nabe - im Werk des Nabenherstellers vorzumontieren. Der Fahrradhersteller wiederum kann z. B. nur die äußere Anschlagkomponente des Endanschlags entfernen, um eine Bremsscheibe oder dergleichen zu montieren. Oder der Fahrradhersteller montiert die äußere Anschlagkomponente erst nach der Montage der Bremsscheibe. Dadurch bleibt in beiden Fällen das Innere der Nabe von der Montage einer solchen Scheibenbremse unberührt. Die Montage geht schneller und es können weniger Fehler auftreten. Gleichzeitig kann der Endanschlag in seinen Außendimensionen flexibler gestaltet werden, als es im Stand der Technik war.

Unter dem inneren Anschlag wird hier der axial innere Anschlag und unter dem äußeren Anschlag wird der axial äußere Anschlag verstanden. Der äußere Anschlag ist dabei zur Aufnahme wenigstens eines Teils der Klemmkraft von einem Ausfallende bzw. einer Rahmenkomponente ausgebildet. Die Fahrradkomponente kann zur Aufnahme einer Steckachse oder zur Befestigung mittels eines Schnellspanners ausgebildet sein. In allen Fällen ist es bevorzugt, dass das innere axiale Ende bzw. der innere Anschlag in ein erstes Ende des Nabengehäuses eintaucht. Der äußere Anschlag am äußeren axialen Ende steht vorzugsweise aus dem Nabengehäuse nach außen hervor.

Der Endanschlag weist erfindungsgemäß den inneren Anschlag mit der inneren Anschlagfläche auf. Die innere Anschlagfläche ist dabei geeignet, die Klemmkraft auf die Lagereinrichtung zu übertragen. Das bedeutet, dass der innere Anschlag die Klemmkraft ganz oder teilweise mittelbar und/oder ganz oder teilweise unmittelbar auf die Lagereinrichtung überträgt. Es ist insbesondere möglich, zwischen der Lagereinrichtung und dem inneren Anschlag eine kraftüberleitende Komponente einzubauen oder anzuordnen. Eine solche kraftüberleitende Komponente kann dazu ausgebildet sein, die Klemmkraft ganz oder teilweise auf die Lagereinrichtung zu übertragen. In anderen und besonders Schnellspanners ausgebildet sein. In allen Fällen ist es bevorzugt, dass das innere axiale Ende bzw. der innere Anschlag in ein erstes Ende des Nabengehäuses eintaucht. Der äußere Anschlag am äußeren axialen Ende steht vorzugsweise aus dem Nabengehäuse nach außen hervor.

Der Endanschlag weist erfindungsgemäß den inneren Anschlag mit der inneren Anschlagfläche auf. Die innere Anschlagfläche ist dabei geeignet, die Klemmkraft auf die Lagereinrichtung zu übertragen. Das bedeutet, dass der innere Anschlag die Klemmkraft ganz oder teilweise mittelbar und/oder ganz oder teilweise unmittelbar auf die Lagereinrichtung überträgt. Es ist insbesondere möglich, zwischen der Lagereinrichtung und dem inneren Anschlag eine kraftüberleitende Komponente einzubauen oder anzuordnen. Eine solche kraftüberleitende Komponente kann dazu ausgebildet sein, die Klemmkraft ganz oder teilweise auf die Lagereinrichtung zu übertragen. In anderen und besonders bevorzugten Ausgestaltungen grenzt der innere Anschlag direkt an die Lagereinrichtung an.

Der Endanschlag kann auch als Adaptereinheit bezeichnet werden.

Durch die Zweiteilung des Endanschlags bedingt, können die Anschlagflächen des äußeren Anschlags und des inneren Anschlags voneinander entkoppelt werden. Dadurch stehen größere konstruktive Freiheiten zur Verfügung, die eine steifere Verbindung der Fahrradkomponente mit dem Rahmen oder der Gabel des Fahrrads erlauben.

Vorzugsweise weist der äußere Anschlag einen größeren Außendurchmesser auf als ein maximaler Außendurchmesser der Lagereinrichtung. Insbesondere weist der äußere Anschlag einen größeren Außendurchmesser auf als ein maximaler Innendurchmesser des Nabengehäuses. Bei dieser Ausgestaltung wird klar, dass nur ein erfindungsgemäßer zweiteiliger Endanschlag eine Teilmontage des Endanschlags ermöglicht, während das Innere der Nabe bzw. Fahrradkomponente noch vollständig montiert bleibt, um z. B. eine Bremsscheibe zu montieren.

In bevorzugten Ausgestaltungen ist an der ersten Anschlagkomponente der innere Anschlag mit der inneren Anschlagfläche ausgebildet und/oder es ist an der zweiten Anschlagkomponente der äußere Anschlag mit der äußeren Anschlagfläche ausgebildet. Dabei ist es möglich, dass wenigstens eine Anschlagfläche, nämlich die innere Anschlagfläche und/oder die äußere Anschlagfläche, teilweise von der ersten Anschlagkomponente und teilweise von der zweiten Anschlagkomponente zur Verfügung gestellt werden. Das ist beispielsweise möglich, wenn eine der beiden Anschlagkomponenten die andere Anschlagkomponente radial umgibt, sodass an einem oder beiden Enden des Endanschlags der innere bzw. äußere Anschlag jeweils durch Flächen der ersten und/oder zweiten Anschlagkomponente gebildet werden.

Besonders bevorzugt wird wenigstens ein Anschlag (innerer und/oder äußerer Anschlag) durch jeweils nur eine von beiden Anschlagkomponenten gebildet. Vorzugsweise wird der axial innere Anschlag nur und/oder vollständig durch die erste Anschlagkomponente gebildet. Vorzugsweise wird der axial äußere Anschlag nur und/oder vollständig durch die zweite Anschlagkomponente gebildet.

Besonders bevorzugt ist an wenigstens einem Ende des Nabengehäuses eine Bremsscheibenaufnahme und insbesondere eine Standard-Bremsscheibenaufnahme mit einer insbesondere unrunden Außenkontur ausgebildet. Vorzugsweise ist an dem Nabengehäuse in einem axialen Bereich der Bremsscheibenaufnahme eine Fixieraufnahme mit einem Innengewinde ausgebildet. An der Fixieraufnahme kann beispielsweise ein Fixierring zur Fixierung einer Bremsscheibe angebracht werden. In einfachen Fällen erfolgt dies dadurch, dass an dem Fixierring ein Außengewinde vorgesehen ist, welches in ein Innengewinde an der Fixieraufnahme eingeschraubt wird. Möglich ist es aber auch, dass der Fixierring über eine oder mehrere separate Schrauben oder dergleichen seitlich an dem Nabengehäuse angebracht wird. Jedenfalls wird eine an der Bremsscheibenaufnahme aufgenommene Bremsscheibe in axialer Richtung durch den Fixierring fixiert, während eine rotationsfeste Aufnahme durch die unrunde Außenkontur an dem Nabengehäuse gewährleistet wird. Über derartige Ausgestaltungen kann eine einfache und sehr funktionelle Montage einer Bremsscheibe erfolgen.

Der Fixierring kann für eine Standard-Bremsscheibe vorgesehen sein. Es ist auch möglich, dass der Fixierring einen Adapter einstückig umfasst oder dass ein zusätzlicher Adapterring zur Verfügung gestellt wird, über den andere Bremsscheiben an der Bremsscheibenaufnahme drehsicher angebracht werden können.

Möglich ist es, dass die Fahrradkomponente mit einem Fixierring und/oder einer Bremsscheibe ausgeliefert wird. Möglich ist es auch, dass ein derartiger Fixierring und/oder Adapterring und gegebenenfalls eine Bremsscheibe als Zukaufteile separat zu erwerben sind. Dabei können diese Bauteile von dem Hersteller der Fahrradkomponente oder auch von anderen Herstellern als Zusatzteile bezogen werden.

Typische Fixierringe verringern jedenfalls den freien Innendurchmesser des Nabengehäuses an dem Ende, an dem der Fixierring angebracht ist oder angebracht wird. Durch den mindestens zweiteiligen Aufbau des Endanschlags werden die Dimensionen des Endanschlags und dessen Kraft übertragender Teile von den freien Abmessungen an dem Nabengehäuse entkoppelt. Dadurch können besonders steife Verbindungen ermöglicht werden.

In einer bevorzugten Weiterbildung ist an einer Fixieraufnahme ein Fixierring zur axialen Fixierung einer Bremsscheibe angeordnet. Ein solcher Fixierring kann ein Standard-Centerlock-Lockring sein oder ein Fixierring mit einer ähnlichen oder gleichwertigen Funktion.

Vorzugsweise ist der Außendurchmesser des äußeren Anschlags größer als ein freier Innendurchmesser eines Fixierringes und insbesondere eines Standard-Fixierringes.

In bevorzugten Ausgestaltungen ist der Fixierring als Einschraubteil ausgebildet und weist wenigstens ein davon nach außen abstehendes Fixierelement zur axialen Fixierung einer Bremsscheibe auf. Das nach außen abstehende Fixierelement kann beispielsweise als umlaufender Flansch ausgebildet sein oder aber einen oder mehrere radial nach außen vorstehende Finger oder dergleichen umfassen, um eine Bremsscheibe in axialer Richtung zu fixieren. Vorzugsweise weist das Einschraubteil ein Außengewinde zum Verschrauben mit einem Innengewinde des Nabengehäuses auf.

Vorteilhafterweise stützt sich die erste Anschlagkomponente unmittelbar gegen die Lagereinrichtung ab. Insbesondere stützt sich die erste Anschlagkomponente gegen einen inneren Lagerring der Lagereinrichtung ab. Möglich ist es aber auch, dass sich die erste Anschlagkomponente unmittelbar gegen die Lagereinrichtung abstützt. Beispielsweise kann eine Zwischenscheibe oder ein Zwischenring oder dergleichen zwischen der Anschlagkomponente und der Lagereinrichtung bzw. dem inneren Lagerring der Lagereinrichtung vorgesehen sein.

In bevorzugten Weiterbildungen umgibt die zweite Anschlagkomponente die erste Anschlagkomponente über wenigstens einen Überlappungsabschnitt radial. Der Durchmesserunterschied zwischen den beiden Anschlagkomponenten ist vorzugsweise gering, um eine genaue Führung zu gewährleisten. Insbesondere ist eine Differenz zwischen dem Innendurchmesser der umgebenden Anschlagkomponente und dem Außendurchmesser der aufgenommenen Anschlagkomponente kleiner als 1/100 des Innendurchmessers der umgebenden Anschlagkomponente und vorzugsweise kleiner als 1/250. Besonders bevorzugt ist die Differenz zwischen dem Innendurchmesser der umgebenden Anschlagkomponente und dem Außendurchmesser der aufgenommenen Anschlagkomponente kleiner als 1/500 und insbesondere sogar kleiner 1/1000 und vorzugsweise kleiner als 1/2000 oder als 1/4000 des Innendurchmessers der umgebenden Anschlagkomponente.

Möglich und bevorzugt ist es, dass die erste und die zweite Anschlagkomponente in dem Überlappungsabschnitt wenigstens zwei gestufte Durchmesserabschnitte aufweisen. Möglich ist es auch, dass sich die erste und die zweite Anschlagkomponente an zwei separaten Überlappungsabschnitten überlappen, wobei an den Überlappungsabschnitten gleiche Durchmesser oder unterschiedliche Durchmesser vorliegen können.

Zwischen der ersten und der zweiten Anschlagkomponente ist vorzugsweise wenigstens ein Reibelement angeordnet. Ein solches Reibelement ist insbesondere als Reibring, Gummiring oder O-Ring ausgebildet. Durch ein Reibelement wie einen O-Ring ist es möglich, die zweite Anschlagkomponente verliersicher an der ersten Anschlagkomponente aufzunehmen. Möglich ist es in diesen Fällen auch, die zweite Anschlagkomponente von der ersten Anschlagkomponente werkzeuglos zum Beispiel von Hand abzuziehen.

In einer bevorzugten Weiterbildung ist das Reibelement in einer Nut in der zweiten Anschlagkomponente angeordnet. Möglich ist es dann zum Beispiel, dass der Überlappungsabschnitt an der zweiten Anschlagkomponente zur definierten Aufnahme und Führung der ersten Anschlagkomponente dient, während die Kraft in dem Überlappungsabschnitt im Wesentlichen innerhalb der ersten Anschlagkomponente abgeleitet wird.

Möglich ist es auch, das Reibelement in einer Nut der ersten Anschlagkomponente anzuordnen. Beispielsweise kann die Nut in einem radial größeren Durchmesserabschnitt der ersten Anschlagkomponente angeordnet werden, um entlang des Kraftüberleitungsweges jeweils genügende Wandstärken für die Kraftüberleitung zur Verfügung zu stellen.

In allen Ausgestaltungen und Weiterbildungen ist es besonders bevorzugt, dass die erste Anschlagkomponente einen rohrartigen Abschnitt aufweist. Außerdem ist es bevorzugt, dass an der ersten Anschlagkomponente und/oder an der zweiten Anschlagkomponente wenigstens ein radialer Flansch in einem Bereich an dem inneren Anschlag vorgesehen ist. Dabei kann ein einzelner Flansch oder es kann ein Doppelflansch oder ein Mehrfachflansch vorgesehen sein, wobei zwischen den beiden Flanschen eines Doppelflansches ein geringer Abstand mit einer umlaufenden Nut vorgesehen ist. Durch einen einzelnen oder einen Doppelflansch oder dergleichen kann eine zuverlässige Dichtung erreicht werden, die das Innere der Nabe zuverlässig vor äußeren Einflüssen schützt.

Insbesondere ein wenigstens als Doppelflansch ausgebildeter Flansch stellt einen zuverlässigen Schutz vor Eintritt von Schmutz und Feuchtigkeit zur Verfügung, da durch einen Doppelflansch in Verbindung mit der umlaufenden Wandung des Nabengehäuses ein geringer radialer Spalt von 2 mm, 1 mm oder weniger zur Verfügung gestellt wird, sodass Schmutz und Wasser außerhalb des Inneren des Nabengehäuses verbleiben.

Insbesondere ist der radiale Flansch an der ersten Anschlagkomponente vorgesehen und benachbart zu dem inneren Anschlag - aber beabstandet davon - angeordnet. Durch einen geringen Abstand von dem inneren Anschlag aus wird ein reibender der Kontakt des Flansches beispielsweise mit dem Lager oder der Lagereinrichtung verhindert.

In allen Ausgestaltungen ist es bevorzugt, dass die erste Anschlagkomponente durch einen separaten Haltering an dem Nabengehäuse gesichert ist. Der Haltering ist insbesondere als separates Bauteil ausgebildet und kann in das Nabengehäuse eingeschoben, eingepresst oder eingeschraubt sein. Möglich ist es auch, dass der Haltering über ein Reibelement wie einen Reibring oder einen O-Ring verfügt, wodurch der Haltering zuverlässig in dem Nabengehäuse fixiert wird.

Der Haltering sorgt insbesondere dafür, dass bei einem Abziehen der zweiten Anschlagkomponente mit dem äußeren Anschlag die erste Anschlagkomponente wie gewünscht innerhalb des Nabengehäuses verbleibt. Dadurch kann beispielsweise die Bremsscheibe montiert werden und der Fixierring angebracht werden, bevor die zweite Anschlagkomponente wieder von außen auf die erste Anschlagkomponente aufgesteckt wird.

Der Haltering umfasst vorzugsweise wenigstens einen radial nach innen abstehenden Flansch. Möglich ist auch, dass der Haltering einen Doppelflansch oder dergleichen aufweist, der von außen radial nach innen absteht. Der Haltering kann insgesamt einen C- oder U-förmigen Querschnitt aufweisen.

Der radial nach innen abstehende Flansch des Halterings bildet vorzugsweise zusammen mit dem radialen Flansch der ersten Anschlagkomponente wenigstens einen Teil einer Dichteinrichtung zur Abdichtung des Inneren des Nabengehäuses. Es ist möglich, dass noch weitere Dichtelemente vorgesehen sind. In einfachen Ausgestaltungen wird die Dichteinrichtung nur durch den Flansch an dem Haltering oder durch den radialen Flansch an der ersten Anschlagkomponente gebildet. Möglich ist es auch, dass die Dichteinrichtung an dem Haltering wenigstens ein Flansch und an der ersten Anschlagkomponente wenigstens ein Flansch umfasst, die zusammen insgesamt die Dichteinrichtung bilden.

Besonders bevorzugt beträgt der Außendurchmesser des äußeren Anschlags wenigstens 26 mm und vorzugsweise wenigstens 27 mm und insbesondere 28 mm oder mehr.

Die Fahrradkomponente kann zur Aufnahme einer Steckachse und/oder einer durchgehenden Achse vorgesehen oder ausgebildet sein und/oder eine solche umfassen. Die Befestigung an einem Rahmen eines Fahrrads oder dergleichen kann auch über einen Schnellspanner erfolgen.

Es ist möglich und bevorzugt, Vorderradnaben als Fahrradkomponenten gemäß der Erfindung auszubilden. Es ist auch möglich Fahrradkomponenten auszubilden, die als Hinterradnaben ausgestaltet werden oder eine solche umfassen. Eine solche Hinterradnabe umfasst vorzugsweise ein Nabengehäuse mit insbesondere daran ausgebildeten Speichenflanschen zur Befestigung von Speichen. Vorzugsweise ist eine Scheibenbremsenaufnahme an dem ersten Ende des Nabengehäuses ausgebildet oder befestigt. An dem zweiten Ende ist vorzugsweise ein Rotor zur Aufnahme wenigstens eines Ritzels oder wenigstens eines Ritzelpaketes vorgesehen. Der Rotor ist insbesondere über zwei axial beabstandete Lagereinrichtungen drehbar gelagert. Weiterhin ist vorzugsweise ein Freilauf vorgesehen, der vorzugsweise als Zahnscheibenfreilauf ausgebildet ist. Der Freilauf umfasst insbesondere zwei Zahnscheiben, die über eine oder zwei Federeinrichtungen von außen in die Eingriffsstellung vorbelastet werden.

Auch bei einer solchen Fahrradkomponente sind vorzugsweise Endanschläge vorgesehen, von denen wenigstens einer wiederum aus wenigstens zwei Anschlagkomponenten besteht. Die erste Anschlagkomponente kann jeweils einen einfachen Flansch oder einen Doppelflansch umfassen. Die erste Anschlagkomponente kann über wenigstens ein Reibelement auf einem Achsteil gehalten werden.

An dem anderen Ende der Nabe kann ein Befestigungsring oder eine Befestigungseinheit zur Befestigung eines Ritzelpaketes und vorzugsweise Standard-Ritzelpaketes angebracht werden. Der Befestigungsring kann z. B. in ein Innengewinde an dem äußeren Ende des Rotors eingeschraubt werden. Dann steht auch dort ein reduzierter freier - also zugänglicher - Innendurchmesser zur Verfügung. Auch dort ermöglicht ein zweiteiliger Endanschlag eine deutlich vergrößerte äußere Anschlagfläche auch an der Rotorseite der Nabe.

Der Außendurchmesser der äußeren Anschlagfläche kann dabei dann größer gewählt werden als der verbleibende Innendurchmesser des Befestigungsrings. Der Außendurchmesser kann auch größer gewählt werden als der Innendurchmesser des Innengewindes des Rotors zum Einschrauben des Befestigungsrings

Der erfindungsgemäße Endanschlag für eine Nabe eines wenigstens teilweise muskelbetriebenen Fahrrades umfasst eine erste Anschlagkomponente mit einem inneren Anschlag und eine wenigstens teilweise daran angeordnete innere Anschlagfläche und eine zweite Anschlagkomponente mit einem äußeren Anschlag und einer wenigstens teilweise daran angeordneten äußeren Anschlagfläche. Die erste Anschlagkomponente ist im Wesentlichen rohrartig ausgebildet. Die zweite Anschlagkomponente ist ebenfalls im Wesentlichen rohrartig ausgebildet und weist einen nach außen abstehenden Flansch auf. Der nach außen abstehende Flansch bildet den äußeren Anschlag. Die zweite Anschlagkomponente und die erste Anschlagkomponente umgeben sich abschnittsweise oder wenigstens über einen Abschnitt radial. Die erste Anschlagkomponente und die zweite Anschlagkomponente werden über ein Reibelement verliersicher zusammengehalten. Ein solches Reibelement kann beispielsweise als O-Ring aus z. B. einem elastischen Material ausgebildet sein.

Auch der erfindungsgemäße Endanschlag hat erhebliche Vorteile, da er eine flexible Dimensionierung und Ausgestaltung erlaubt.

Vorzugsweise weist die erste Anschlagkomponente wenigstens einen nach außen abstehenden Flansch auf. Der Flansch an der ersten Anschlagkomponente ist vorzugsweise benachbart zu dem inneren Anschlag und beabstandet davon angeordnet. Ein axialer Abstand des Flansches von dem inneren Anschlag ist vorzugsweise kleiner als die halbe axiale Erstreckung der ersten Anschlagkomponente. Vorzugsweise ist der Abstand kleiner als 3 mm und insbesondere kleiner als 1 mm.

Besonders bevorzugt ist an der ersten Anschlagkomponente ein nach außen abstehender Doppelflansch ausgebildet. Der Flansch oder der Doppelflansch sind so dimensioniert, dass ein geringer radialer Spalt zu der inneren Umfangsfläche des Nabengehäuses in dem Bereich des Flansches bzw. des Doppelflansches verbleibt. Der radiale Spalt ist insbesondere kleiner als 2 mm und vorzugsweise kleiner als 1 mm.

Der Flansch an der zweiten Anschlagkomponente bildet insbesondere den äußeren Anschlag mit der äußeren Anschlagfläche.

Vorzugsweise weist die erste Anschlagkomponente zwei Durchmesserabschnitte auf. Besonders bevorzugt weist die äußere Anschlagfläche einen größeren Außendurchmesser auf als der Flansch an der ersten Anschlagkomponente.

Insbesondere die äußere Anschlagfläche des äußeren Anschlags ist vorzugsweise als eine ebene Fläche ausgebildet. Die äußere Anschlagfläche kann rund oder oval oder sonstwie ausgebildet sein. Eine von der runden Form abweichende Form ist insbesondere bevorzugt, wenn der äußere Anschlag verdrehsicher an einer Rahmenkomponente eines Zweirads aufnehmbar ist.

Das erfindungsgemäße Zweirad umfasst einen Rahmen und eine Gabel und Ausfallenden an dem Rahmen und der Gabel. Es ist ein wenigstens teilweise muskelbetriebener Antrieb vorgesehen. Das Zweirad verfügt über zwei Laufräder, nämlich ein Vorderrad und ein Hinterrad, wobei jedes Laufrad eine Nabe und eine zugeordnete Achseinheit aufweist. Wenigstens ein Laufrad weist eine Bremsscheibe auf, die über einen in die Nabe eingeschraubten Fixierring axial fixiert ist. Die Naben sind über Endanschläge klemmend an den Ausfallenden aufgenommen. Wenigstens ein Endanschlag besteht aus einer ersten Anschlagkomponente und wenigstens einer zweiten die Klemmkraft wenigstens teilweise übertragenden Anschlagkomponente.

Auch das erfindungsgemäße Zweirad hat viele Vorteile, da es eine steife Konstruktion ermöglicht.

Vorzugsweise weist die erste Anschlagkomponente einen inneren Anschlag im Inneren eines Nabengehäuses der Nabe und die zweite Anschlagkomponente weist einen äußeren Anschlag mit einem Außendurchmesser auf, der größer ist als ein Innendurchmesser des Fixierringes.

In allen Ausgestaltungen und Weiterbildungen ist es bevorzugt, dass der Endanschlag als eine vormontierbare oder vormontierte Baugruppe oder Adaptereinheit ausgebildet ist.

Weitere Vorteile und Merkmale der vorliegenden Erfindung ergeben sich aus den Ausführungsbeispielen, die nachfolgend mit Bezug auf die beiliegenden Figuren erläutert werden.

In den Figuren zeigen:
- Fig. 1: eine schematische Seitenansicht eines Mountainbikes;
- Fig. 2: eine schematische Seitenansicht eines Renn- bzw. Tourenrades;
- Fig. 3: eine geschnittene Seitenansicht einer erfindungsgemäßen Fahrradkomponente;
- Fig. 4: vergrößerte geschnittene Darstellungen der Endanschläge der Fahrradkomponente nach Fig. 3;
- Fig. 5: eine Steckachse für die Fahrradkomponente nach Fig. 3;
- Fig. 6: ein anderes Ausführungsbeispiel einer Fahrradkomponente in einer geschnittenen Ansicht;
- Fig. 7: noch ein Ausführungsbeispiel einer im Schnitt dargestellten Fahrradkomponente;
- Fig. 8: ein weiteres Ausführungsbeispiel einer im Schnitt dargestellten Fahrradkomponente; und
- Fig. 9: eine vergrößerte schematische geschnittene Darstellung eines weiteren Endanschlags.

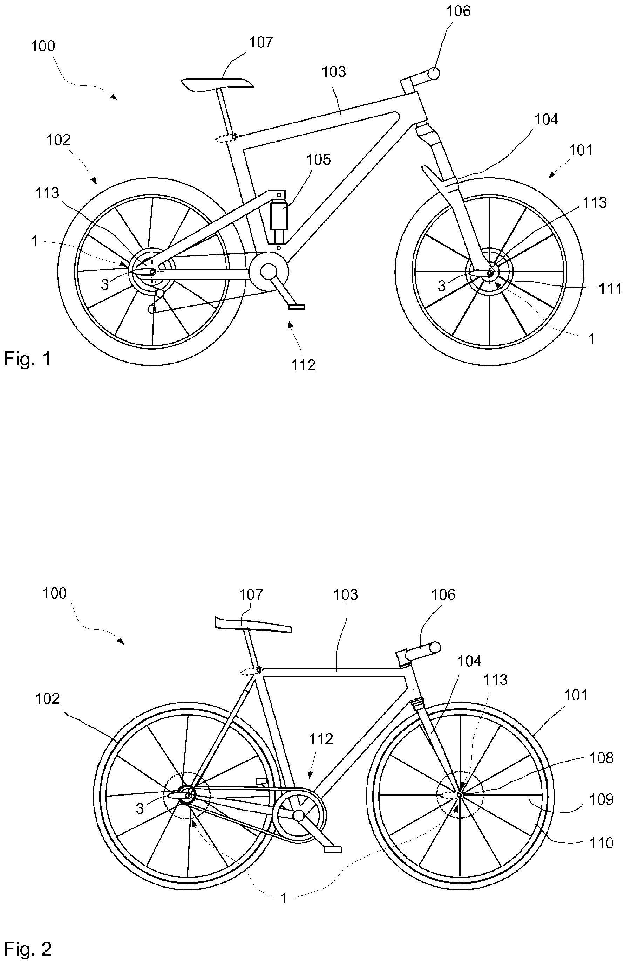

Figur 1 zeigt eine schematische Darstellung eines Mountainbikes als Fahrrad bzw. Zweirad 100. Das Fahrrad weist ein Vorderrad 101, ein Hinterrad 102, einen Rahmen 103, eine Federgabel 104, einen Hinterraddämpfer 105, einen Lenker 106 und einen Sattel 107 auf. Als Antrieb 112 sind Pedale und hier eine Kettenschaltung vorgesehen. Das Vorderrad 101 und das Hinterrad 102 sind jeweils an Ausfallenden 113 an der Gabel 104 bzw. dem Rahmen 103 befestigt.

Figur 2 zeigt eine stark schematische Seitenansicht eines Rennrades oder Tourenrades als Zweirad 100, wobei das Fahrrad wiederum über ein Vorderrad 101 und ein Hinterrad 102 als Laufräder verfügt. Die Laufräder sind an den Ausfallenden 113 an der Gabel 104 bzw. dem Rahmen 103 befestigt. Das Vorderrad und das Hinterrad 101,102 weisen jeweils Speichen 109 und eine Felge 110 auf.

Sowohl das Zweirad nach Figur 1 als auch das Zweirad nach Figur 2 weisen an den Laufrädern 101,102 jeweils eine Bremsscheibe 111 auf.

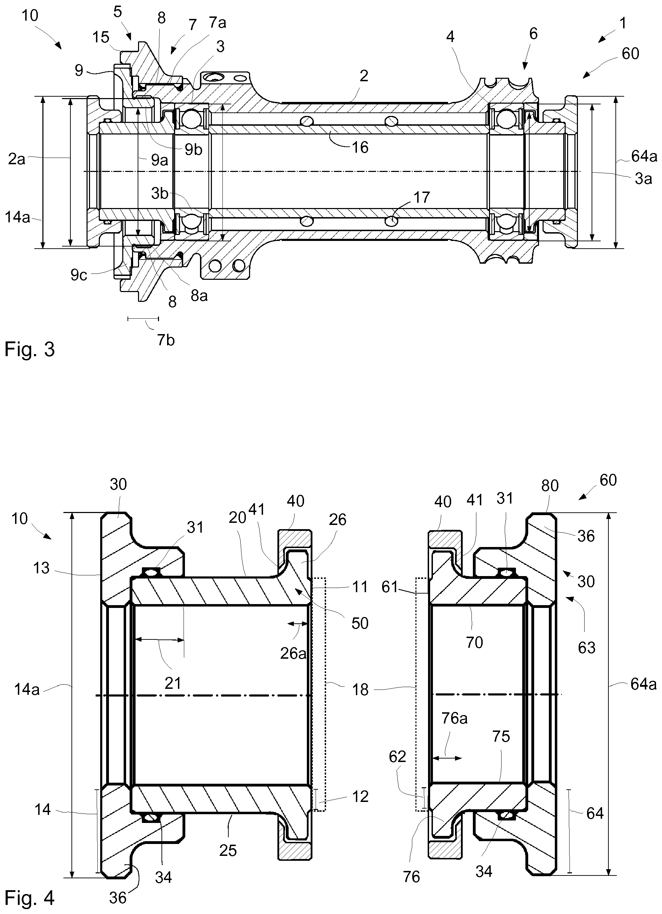

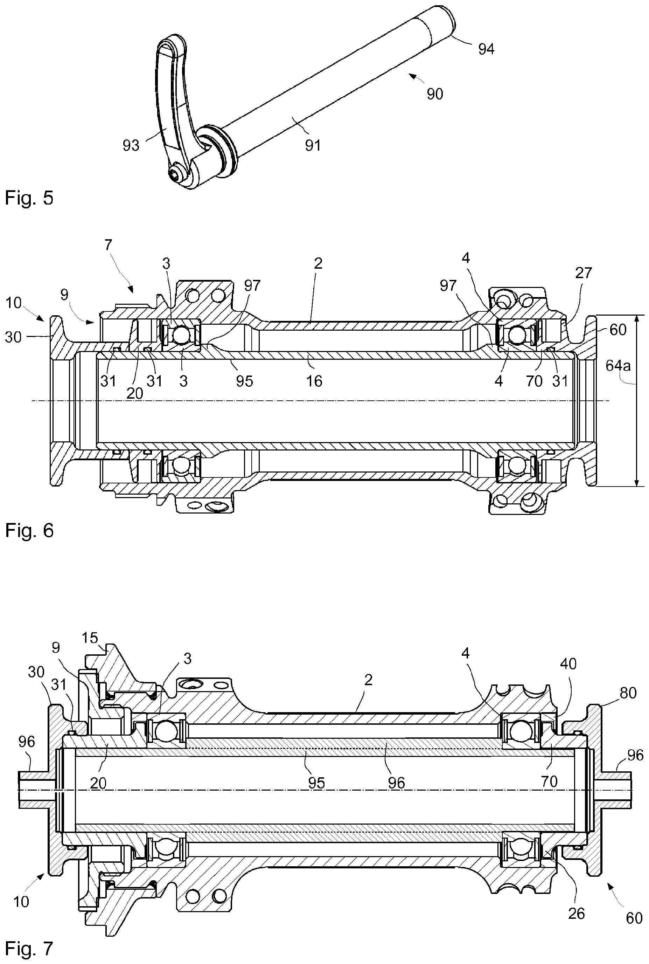

Figur 3 zeigt einen schematischen Querschnitt einer Fahrradkomponente 1, die hier als Nabe 108 ausgebildet ist und über ein Nabengehäuse 2 verfügt. Die Nabe 108 ist für die Aufnahme einer Steckachse ausgebildet, wie sie beispielsweise in Figur 5 abgebildet ist.

An dem ersten Ende 5 des Nabengehäuses 2 ist eine Bremsscheibenaufnahme 7 mit einer unrunden Außenkontur 7a ausgebildet. An der Bremsscheibenaufnahme 7 ist hier im Ausführungsbeispiel ein Adapterring 15 angebracht, über den unterschiedliche Bremsscheiben montiert werden können. Der Adapterring 15 wird drehfest über die unrunde Außenkontur 7a des Nabengehäuses 2 gehalten. In axialer Richtung wird der Adapterring 15 durch einen entsprechenden Anschlag an dem Nabengehäuse und durch einen Fixierring 9 gehalten, der mit einem Außengewinde in ein Innengewinde 8a an der Fixieraufnahme 8 des Nabengehäuses eingeschraubt ist.

Sowohl der Fixierring 9 als auch der Adapterring 15 können, müssen aber nicht Bestandteil einer verkauften Nabe 108 sein. Möglich und bevorzugt ist es auch, auf die Bremsscheibenaufnahme 7 direkt eine Standard-Bremsscheibe aufzubringen, die dann durch einen Fixierring 9 in axialer Richtung fest aufgenommen wird. Insbesondere ist die Bremsscheibenaufnahme 7 zur Aufnahme einer Bremsscheibe nach dem "Centerlock"-Standard ausgebildet.

An dem Nabengehäuse sind zwei Lagereinrichtungen 3 und 4 aufgenommen, um das Nabengehäuse 2 gegenüber der noch einzuführenden Steckachse 91 drehbar zu lagern. Die Außenringe der Lagereinrichtungen 3 und 4 werden axial nach innen an entsprechenden Absätzen in dem Nabengehäuse 2 fixiert.

Zwischen den inneren Lagerringen 3b und 4b der Lagereinrichtungen 3 und 4 ist ein Abstandhalter 16 angeordnet, der hier die Aufgabe hat, die Lagereinrichtungen 3 und 4 im definierten Abstand zueinanderzuhalten und der weiterhin die auftretende Klemmkraft bei der Klemmung der Nabe weiterleitet. Vor der Montage der Achseinrichtung 90 wird eine radiale Bewegung des Abstandhalters 16 durch die O-Ringe 17 an dem Abstandhalter 16 auf ein geringes Maß reduziert, sodass die Steckachse 91 aus Figur 5 einfach in das Innere der Fahrradkomponente 1 eingeführt werden kann.

An dem ersten Ende 5 des Nabengehäuses 2 ist ein Endanschlag 10 vorgesehen, der zweiteilig ausgebildet ist und eine erste Anschlagkomponente 20 und eine zweite Anschlagkomponente 30 umfasst. Der Endanschlag 10 dient zur Überleitung der Klemmkräfte von dem äußeren Anschlag 13 an der zweiten Anschlagkomponente 30 über den inneren Anschlag 11 an der ersten Anschlagkomponente hier direkt auf den inneren Lagerring 3b der Lagereinrichtung 3.

Die Klemmkräfte werden dann weiter von dem inneren Lagerring 3b über den Abstandhalter 16 auf den inneren Lagerring der Lagereinrichtung 4 übertragen, von wo sie auf den Endanschlag 60 übergeleitet werden. Der Endanschlag 60 besteht wiederum aus zwei Anschlagkomponenten nämlich einer ersten Anschlagkomponente 70 und einer zweiten Anschlagkomponente 80, an denen wiederum ein innerer Anschlag 62 und ein äußerer Anschlag 63 ausgebildet sind. Von den Endanschlägen 10 und 60 werden die Klemmkräfte auf das jeweilige Ausfallende 113 übertragen bzw. von dort aufgenommen.

Möglich ist es auch, dass zwischen einem Endanschlag 10, 60 und der entsprechenden Lagereinrichtung 3 und 4 eine Kraftüberleitungskomponente 18 angeordnet ist. Möglich ist es auch, dass zwischen beiden Endanschlägen 10, 60 und den entsprechenden Lagereinrichtungen 3 und 4 eine Kraftüberleitungskomponente 18 angeordnet ist, wie es gestrichelt in Fig. 4 abgebildet ist. Dann erfolgt eine mittelbare Kraftüberleitung von dem entsprechenden Endanschlag 10, 60 auf die Lagereinrichtung 3, 4. In besonders bevorzugten Ausgestaltungen ist nur eine Kraftüberleitungskomponente 18 oder keine Kraftüberleitungskomponente 18 vorgesehen.

Eingezeichnet in Figur 3 ist ein freier Innendurchmesser 9a des Fixierringes 9. Von dem Einschraubteil 9b aus erstreckt sich als Fixierelement 9c ein ringförmiger Flansch radial nach außen, womit eine Bremsscheibe oder ein Adapterring 15 fixiert werden.

Der freie Innendurchmesser 9a des Fixierringes 9 ist hier kleiner als der Außendurchmesser 3a der Lagereinrichtung 3 bzw. 4. Der größte Innendurchmesser an der Nabe findet sich in dem axialen Bereich 7b an dem Innengewinde 8a der Fixieraufnahme 8.

Der Außendurchmesser 14a der äußeren Anschlagfläche 14 des äußeren Anschlags 13 ist hier größer als der maximale Innendurchmesser 2a des Nabengehäuses, der hier gleich dem Durchmesser an dem Innengewinde 8a ist. Der Außendurchmesser 14a ist somit größer als der freie Innendurchmesser 9a des Fixierringes 9 und ebenfalls größer als der Außendurchmesser 3a der Lagereinrichtungen 3 und 4. Das ist möglich, da die Endanschläge 10 und 60 jeweils zweiteilig ausgebildet sind, wobei die erste Anschlagkomponente und die zweite Anschlagkomponente jeweils durch ein Reibelement wie einen O-Ring 31 von Hand lösbar miteinander verbunden sind.

Das bedeutet, dass zum Austausch oder gegebenenfalls zur Montage einer Bremsscheibe die zweite Anschlagkomponente 30 axial abgezogen wird, bevor die Bremsscheibe angebracht und über einen Fixierring 9 fixiert wird. Im Anschluss daran kann der zweite Endanschlag 30 einfach auf den ersten Endanschlag 20 aufgeschoben werden. Eine vollständige Demontage der Nabe ist nicht nötig.

Figur 4 zeigt vergrößerte Darstellungen der Endanschläge 10 und 60. Beide Endanschläge 10 und 60 bestehen jeweils aus einer ersten Anschlagkomponente 20 bzw. 70 und einer zweiten Anschlagkomponente 30 bzw. 80. Hier sind die zweiten Anschlagkomponenten 30 und 80 identisch ausgebildet, sodass sich insgesamt nur drei unterschiedliche Teile ergeben.

An dem inneren Anschlag 11 der ersten Anschlagkomponente 20 ist ein radialer Flansch 26 angeordnet, der sich etwas beabstandet von dem axial inneren Ende der ersten Anschlagkomponente 20 radial nach außen erstreckt, um einen reibenden Kontakt mit der Lagereinrichtung 3 bzw. 4 oder anderen Komponenten zuverlässig zu vermeiden. Ansonsten weist die erste Anschlagkomponente im Wesentlichen einen rohrartigen Abschnitt 25 auf.

Die zweite Anschlagkomponente 30 umfasst ebenfalls einen rohrartigen Abschnitt. Am äußeren Ende der zweiten Anschlagkomponente 30 erstreckt sich der äußere Anschlag 13 mit der äußeren Anschlagfläche 14 radial nach außen. Insgesamt ergibt sich eine hier ringförmige äußere Anschlagfläche 14 mit einem Außendurchmesser 14a, der erheblich größer ist als der Außendurchmesser an dem radialen Flansch 26 der ersten Anschlagkomponente 20.

Die erste Anschlagkomponente 20 und die zweite Anschlagkomponente 30 überlappen sich in einem Überlappungsabschnitt 21, in dem ein Reibelement 31 wie ein O-Ring angeordnet ist. Der O-Ring ist in einer Nut 34 in der zweiten Anschlagkomponente 30 angeordnet.

Die Kraftübertragung bei der Klemmung erfolgt hier von dem äußeren Anschlag 13 über das stirnseitige Ende des rohrartigen Abschnitts 25 durch die erste Anschlagkomponente 20 hindurch zu dem inneren Anschlag 11, von wo die Klemmkräfte über den inneren Lagerring 3b und den Abstandhalter 16 auf den inneren Lagerring der Lagereinrichtung 4 abgeleitet werden. Von dort werden die Klemmkräfte über den anderen Endanschlag 60 schließlich in das Ausfallende abgeleitet.

In der vergrößerten Darstellung gemäß Figur 4 ist die Dichteinrichtung 50 zu erkennen, die hier durch den Haltering 40 und den radialen Flansch 26 der ersten Anschlagkomponente 20 gebildet wird. Der Haltering 40 wird axial von außen in das Nabengehäuse 2 eingeschoben und dort eingeschraubt oder über Reibungskräfte gehalten.

An dem Haltering 40 ist an dem der zweiten Anschlagkomponente 30 zugewandten Ende ein sich radial nach innen erstreckender Flansch 41 vorgesehen. Zwischen den Flanschen 41 und 26 ergibt sich ein dünner Spalt, der einen Dichtspalt der Dichteinrichtung 50 zur Verfügung stellt. Der Dichtspalt wird mehrfach umgelenkt, sodass sich durch die Flansche 41 des Halteringes 40 und den Flansch 26 der ersten Anschlagkomponente 20 praktisch eine Labyrinthdichtung ergibt.

In dem Bereich 26a des ersten Flansches 26 kann auch ein Doppelflansch vorgesehen sein, mit dem die Dichtwirkung noch verstärkt werden kann. Außerdem kann gegebenenfalls das Gewicht der ersten Anschlagkomponente etwas reduziert werden.

Der Endanschlag 60 ist entsprechend aufgebaut, weist hier aber eine geringere axiale Länge auf. Der Endanschlag 60 ist an dem zweiten Ende 6 des Nabengehäuses 2 vorgesehen, wo keine Bremsscheibe 7 vorhanden ist. Auch der Endanschlag 60 weist eine erste Anschlagkomponente 70 und eine zweite Anschlagkomponente 80 auf, die hier identisch mit der zweiten Anschlagkomponente 30 des Endanschlags 10 ausgebildet ist. Die beiden Anschlagkomponenten 70 und 80 werden über einen O-Ring 31 verliersicher zusammengehalten. Die erste Anschlagkomponente 70 des Endanschlags 60 wird ebenso wie die erste Anschlagkomponente 20 des Endanschlags 10 durch den Haltering 40 im Inneren des Nabengehäuses 2 gehalten. Deshalb wird auch beim Abziehen der zweiten Anschlagkomponente 30, 80 die jeweils erste Anschlagkomponente 20, 70 innerhalb des Nabengehäuses 2zurückgehalten.

Auch die zweite Anschlagkomponente 80 umfasst einen rohrartigen Abschnitt. Am äußeren Ende weist die zweite Anschlagkomponente 80 den äußeren Anschlag 63 mit der radial nach außen abstehenden Anschlagfläche 64 auf. Die ringförmige äußere Anschlagfläche 64 mit einem Außendurchmesser 64a ist größer als der Außendurchmesser an dem radialen Flansch 76 oder gegebenenfalls an einem Doppelflansch der ersten Anschlagkomponente 70.

Figur 5 zeigt eine schematische Darstellung einer Achseinrichtung 90, die hier als Steckachse 91 ausgebildet ist und an einem Ende ein Gewinde 94 und am anderen Ende einen Spannhebel 93 umfasst.

Figur 6 zeigt eine Variante einer Fahrradkomponente 1, die ähnlich aufgebaut ist wie die Fahrradkomponente gemäß Figur 3. Auch die Fahrradkomponente 1 nach Figur 6 ist zur Aufnahme einer Steckachse 91 ausgebildet. Im Unterschied zur Ausgestaltung nach Figur 3 werden hier die Lagereinrichtungen 3 und 4 auf einem Achsteil 95 montiert, welches mit zwei nach außen abstehenden radialen Absätzen 97 versehen ist. Die Absätze 97 bilden einen Abstandhalter 16.

Der Endanschlag 10 besteht wiederum aus zwei Anschlagkomponenten 20 und 30. Im Unterschied zum Ausführungsbeispiel nach Figur 3 weist die erste Anschlagkomponente 20 hier einen Doppelflansch 27 auf, wodurch eine ausreichende Dichtwirkung erzielbar ist. Weiterhin wird die erste Anschlagkomponenten 20 hier über Reibelemente wie O-Ringe auf dem Achsteil 95 gehalten, wodurch auf die Halteringe 40 verzichtet werden kann. Möglich ist es auch, einen zusätzlichen Haltering 40 anzubringen, umso insgesamt drei benachbarte Flansche als Dichteinrichtung 50 vorzusehen.

Der Endanschlag 60 besteht hier aus einer einzigen Komponente, in der die Anschlagkomponente 70 und 80 integriert sind. An dem Endanschlag ist auch hier ein Doppelflansch 27 vorgesehen. Der Endanschlag 60 wird auch über über ein Reibelement 31 wie einen O-Ring auf dem Achsteil 95 gehalten.

Die Endanschläge 10 und 60 können aber auch beide zweiteilig ausgebildet werden.

Die weiteren Details stimmen mit dem Ausführungsbeispiel gemäß Figur 3 im Wesentlichen überein.

Figur 7 zeigt eine weitere Ausführungsvariante, die für den Einsatz mit einem Schnellspanner vorgesehen ist. Die Endanschläge 10 und 60 weisen axial nach außen jeweils einen Achsstummel 96 auf, der zum Einführen in ein Ausfallende eines Fahrradrahmens oder einer Gabel dient. Im Anschluss daran kann ein Schnellspanner durchgeführt werden und die Nabe über ein Schnellspanner an dem Rahmen fixiert werden.

Bei diesem Ausführungsbeispiel ist wiederum ein Achsteil 95 vorgesehen, welches sich über die gesamte Länge des Nabengehäuses 2 erstrecken kann und auf welches die ersten Anschlagkomponenten 20 bzw. 70 aufgeschoben werden. Es ist möglich, O-Ringe zur reibenden Verbindung mit dem Achsteil 95 zu verwenden. Möglich ist es auch, Halteringe 40 einzusetzen, die über einen radial nach innen ragenden Flansch 41 verfügen und somit die ersten Anschlagkomponenten 20 und 70 zuverlässig zurückhalten. Der Abstandhalter 16 zwischen den Lagern 3 und 4 kann einstückig an dem Achsteil oder separat davon ausgebildet sein, wie die gestrichelte Linie anzeigt.

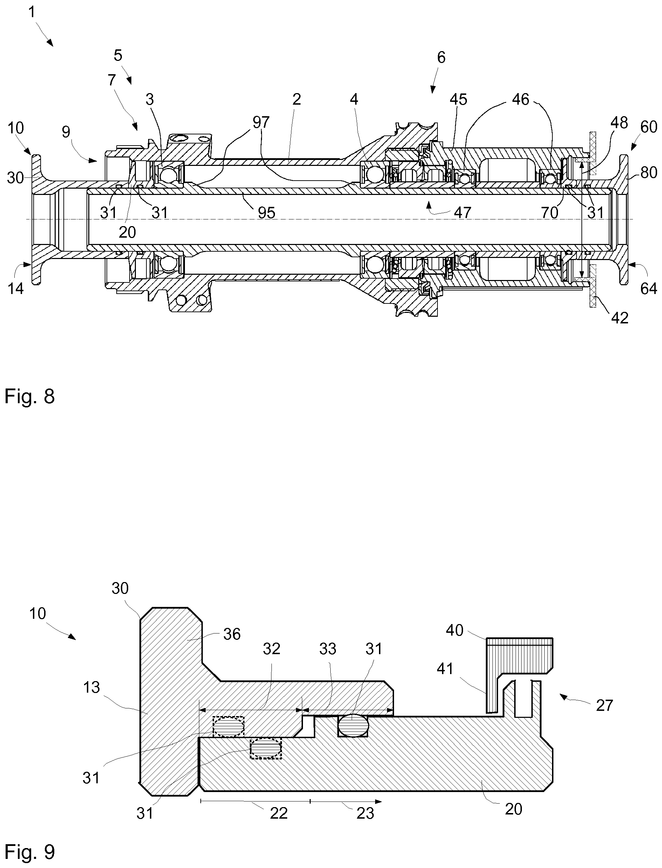

Figur 8 zeigt eine Variante einer als Hinterradnabe ausgeführten bzw. einer eine Hinterradnabe umfassenden Fahrradkomponente 1. Die im Schnitt dargestellte Fahrradkomponente 1 nach Figur 8 weist grundsätzlich ähnlich oder gleiche Bauteile auf, wie die Fahrradkomponente 1 nach Figur 6.

Die Fahrradkomponente 1 nach Figur 8 ist für die Aufnahme einer Steckachse 91 (vgl. Fig. 5) ausgebildet, kann aber auch mit angepassten Endanschlägen 10 und 60 für den Einsatz mit konventionellen Schnellspannern vorgesehen sein. Entsprechend angepasste Endanschläge 10 und 60 können mit Achsstummeln 96 analog zu den Endanschlägen nach Fig. 7 ausgerüstet werden und gegebenenfalls auch Doppelflansche aufweisen.

Die in Figur 8 abgebildete Hinterradnabe weist ein Nabengehäuse 2 mit daran ausgebildeten oder vorgesehenen Speichenflanschen zur Befestigung von Speichen auf. Eine Scheibenbremsenaufnahme 7 ist an dem ersten Ende 5 des Nabengehäuses 2 ausgebildet oder befestigt. An dem zweiten Ende 6 ist der Rotor 45 zur Aufnahme eines nicht dargestellten Ritzelpaketes vorgesehen. Der Rotor 45 ist über zwei axial beabstandete Lager 46 auf dem Achsteil 95 drehbar gelagert. Zwischen den Lagern 46 ist ein hülsenförmiger Abstandhalter eingezeichnet. Der hülsenförmige Abstandhalter hält die inneren Lagerringe der Lager 46 in definiertem Abstand zueinander und überträgt die Axialkraft. Weiterhin ist ein als Zahnscheibenfreilauf ausgebildeter Freilauf 47 vorgesehen. Der Freilauf umfasst zwei Zahnscheiben, die über eine oder zwei Federeinrichtungen jeweils von außen aufeinander zu vorbelastet werden, sodass die Axialverzahnungen der beiden Zahnscheiben des Freilaufs 47 im Grundzustand ineinander eingreifen.

Das Achsteil 95 weist zwei radial nach außen abstehende Absätze 97 auf, an den die inneren Lagerschalen der Lager 3 und 4 axial nach innen hin anliegen.

Die Endanschläge 10 und 60 der in Figur 8 dargestellten Fahrradkomponente 1 bestehen jeweils wiederum aus zwei Anschlagkomponenten. Die ersten Anschlagkomponenten 20 und 70 können hier jeweils einen Doppelflansch 27 aufweisen, wodurch eine ausreichende Dichtwirkung erzielbar ist. Die ersten Anschlagkomponenten 20 und 70 werden über Reibelemente 31 wie O-Ringe auf dem Achsteil 95 gehalten, wodurch auf Halteringe 40 verzichtet werden kann.

Die erste Anschlagkomponente 20 an dem ersten Ende 5 wird hier praktisch nur durch den Doppelflansch 27 und den O-Ring 31 gebildet. Möglich ist es auch hier, einen zusätzlichen Haltering 40 anzubringen, umso insgesamt drei benachbarte Flansche als Dichteinrichtung 50 vorzusehen.

Am anderen Ende der Nabe ist hier im unteren rechten Teil stark schematisch ein kreuzschraffierter Befestigungsring 42 eingezeichnet, der zur Befestigung eines hier nicht dargestellten (Standard-) Ritzelpaketes dient. Der Befestigungsring 42 kann z. B. in ein Innengewinde an dem äußeren Ende des Rotors eingeschraubt werden. Dann steht auch dort nicht der volle Innendurchmesser des Rotors zur Verfügung. Ein zweiteiliger Endanschlag 60 mit den Anschlagkomponenten 70 und 80 ermöglicht eine deutliche vergrößerte äußere Anschlagfläche 64 auch an der Rotorseite der Nabe, ohne bei der Montage des Rotors den Endanschlag vollständig demontieren zu müssen.

Der Außendurchmesser der äußeren Anschlagfläche 64 kann größer gewählt werden als der verbleibende Innendurchmesser 48 des Befestigungsrings 42 und kann auch größer gewählt werden als der Innendurchmesser des Innengewindes des Rotors zum Einschrauben des Befestigungsrings 42, wie es auch in Figur 8 zu sehen ist.

Gegebenenfalls kann der Befestigungsring 42 einen nach innen ragenden Flansch (schräg schraffiert angedeutet) zur noch weiteren Dichtung aufweisen, wenn für eine entsprechende Montage- und Demontagemöglichkeit des Befestigungsrings 42 gesorgt ist.

Die weiteren Details stimmen mit den Ausführungsbeispielen gemäß Figur 6 oder Figur 3 im Wesentlichen überein.

Figur 9 zeigt einen schematischen vergrößerten Querschnitt eines Endanschlags 10 in unterschiedlichen Ausführungsvarianten. Dabei verfügt die erste Anschlagkomponente 20 über einen rohrartigen Abschnitt 26 mit zwei gestuften Durchmesserabschnitten 22 und 23 und hier einen Doppelflansch 27 in der Nähe des inneren Anschlags 11.

Eingezeichnet ist auch der Haltering 40 mit dem radial nach innen ragenden Flansch 41. Der Haltering 40 verfügt über ein Außengewinde, mit dem er in das Nabengehäuse 2 eingeschraubt wird.

Bei dieser Ausgestaltung ist es bevorzugt, das Reibelement 31 zur verliersicheren Verbindung der Anschlagskomponenten 20 und 30 in dem zweiten Durchmesserabschnitt 23 mit größerem Außendurchmesser vorzusehen. Dadurch wird die zur Verfügung stehende Wandstärke zur Übertragung der Klemmkräfte in dem Durchmesserabschnitt 22 nicht verringert. Je nach Ausgestaltung, Materialstärke und Materialart ist es auch möglich, die Nut zur Aufnahme des Reibelementes 31 auch in dem ersten Durchmesserabschnitt 22 anzuordnen, wie es gestrichelt eingezeichnet ist.

Möglich und bevorzugt ist es auch, den Reibring 31 in dem ersten Durchmesserabschnitt 32 der zweiten Anschlagkomponente 30 anzuordnen, wie es ebenfalls gestrichelt eingezeichnet ist. In dem ersten Durchmesserabschnitt 32 liegt eine größere Wandstärke als in dem zweiten Durchmesserabschnitt 33 vor.

Der äußere Anschlag 13 mit der äußeren Anschlagfläche 14 weist einen größeren Außendurchmesser auf als die erste Anschlagkomponente 20.

Insgesamt stellt die Erfindung eine vorteilhafte Fahrradkomponente 1 mit Endanschlägen 10 und 60 zur Verfügung, womit ein Zweirad 100 mit vorteilhaften Eigenschaften hergestellt werden kann.

Durch die vergrößerten Durchmesser der äußeren Anschläge 13 kann eine steifere Laufradaufnahme erzielt werden, wobei durch die zweiteilige Ausgestaltung des Anschlags nur ein geringer zusätzlicher Montageaufwand entsteht und weiterhin Montagefehler zuverlässig vermieden werden können.

**Bezugszeichenliste:**

| | | | |
|---|---|---|---|
| 1 | Schnellspannvorrichtung | 40 | Haltering |
| 1 | Fahrradkomponente | 41 | Flansch |
| 2 | Nabengehäuse | 42 | Befestigungsring |
| 2a | Innendurchmesser (max.) | 45 | Rotor |
| 3 | Lagereinrichtung | 46 | Lager |
| 3a | Außendurchmesser (max.) | 47 | Freilauf |
| 3b | innerer Lagerring | 48 | Innendurchmesser |
| 4 | Lagereinrichtung | 50 | Dichteinrichtung |
| 5, 6 | Ende | 60 | Endanschlag |
| 7 | Bremsscheibenaufnahme | 61 | innerer Anschlag |
| 7a | Außenkontur | 62 | innere Anschlagfläche |
| 7b | axialer Bereich | 63 | äußerer Anschlag |
| 8 | Fixieraufnahme | 64 | äußere Anschlagfläche |
| 8a | Innengewinde | 64a | Außendurchmesser |
| 9 | Fixierring | 70 | erste Anschlagkomponente |
| 9a | freier Innendurchmesser | 75 | rohrartiger Abschnitt |
| 9b | Einschraubteil | 76 | radialer Flansch |
| 9c | Fixierelement, Flansch | 76a | Bereich |
| 10 | Endanschlag | 80 | zweite Anschlagkomponente |
| 11 | innerer Anschlag | 90 | Achseinrichtung |
| 12 | innere Anschlagfläche | 91 | Steckachse |
| 13 | äußerer Anschlag | 92 | durchgehende Achse |
| 14 | äußere Anschlagfläche | 93 | Spannhebel |
| 14a | Außendurchmesser | 94 | Gewinde |
| 15 | Adapterring | 95 | Achsteil |
| 16 | Abstandhalter | 96 | Achsstummel |
| 17 | O-Ring | 97 | Absatz |
| 18 | Kraftüberleitungskomponente | 100 | Zweirad, Fahrrad |
| 20 | erste Anschlagkomponente | 101 | Laufrad, Vorderrad |
| 21 | Überlappungsabschnitt | 102 | Laufrad, Hinterrad |
| 22 | Durchmesserabschnitt | 103 | Rahmen |
| 23 | Durchmesserabschnitt | 104 | Gabel |
| 25 | rohrartiger Abschnitt | 105 | Dämpfer |
| 26 | radialer Flansch | 106 | Lenker |
| 26a | Bereich | 107 | Sattel |
| 27 | Doppelflansch | 108 | Nabe |
| 30 | zweite Anschlagkomponente | 109 | Speiche |
| 31 | Reibelement, O-Ring | 110 | Felge |
| 32 | Durchmesserabschnitt | 111 | Bremsscheibe |
| 33 | Durchmesserabschnitt | 112 | Antrieb |
| 34 | Nut | 113 | Ausfallende |
| 36 | radialer Flansch | | |

## Patentansprüche

1. Fahrradkomponente (1) mit einem Nabengehäuse (2) für ein Laufrad (101, 102) eines wenigstens teilweise muskelbetriebenen Fahrrades (100), wobei das Nabengehäuse (2) über wenigstens eine Lagereinrichtung (3, 4) drehbar gelagert ist,
wobei an wenigstens einem Ende (5, 6) des Nabengehäuses (2) ein Endanschlag (10, 60) angeordnet ist,
wobei der Endanschlag (10, 60) einen inneren Anschlag (11, 61) mit einer inneren Anschlagfläche (12, 62) zur Überleitung einer Klemmkraft auf die Lagereinrichtung (3, 4) und einen äußeren wenigstens einen Teil der Klemmkraft übertragenden Anschlag (13, 63) mit einer äußeren Anschlagfläche (14, 64) aufweist,
**dadurch gekennzeichnet,**
**dass** der Endanschlag (10, 60) eine erste und wenigstens eine zweite die Klemmkraft übertragende Anschlagkomponente (20, 30; 70, 80) umfasst, wobei die zweite Anschlagkomponente (30) die erste Anschlagkomponente (20) über wenigstens einen Überlappungsabschnitt (21) radial umgibt, und wobei der äußere Anschlag (13) eine größere Anschlagfläche (14) und/oder einen größeren Außendurchmesser (14a) als der innere Anschlag (11) aufweist.

2. Fahrradkomponente (1) nach Anspruch 1, wobei der äußere Anschlag (13) einen größeren Außendurchmesser (14a) aufweist als ein maximaler Außendurchmesser (3a) der Lagereinrichtung (3, 4) und/oder als ein maximaler Innendurchmesser (2a) des Nabengehäuses (2).

3. Fahrradkomponente (1) nach einem der vorhergehenden Ansprüche, wobei an der ersten Anschlagkomponente (20) der innere Anschlag (11) mit der inneren Anschlagfläche (12) ausgebildet ist und/oder wobei an der zweiten Anschlagkomponente (30) der äußere Anschlag (13) mit der äußeren Anschlagfläche (14) ausgebildet ist.

4. Fahrradkomponente (1) nach einem der vorhergehenden Ansprüche, wobei an einem Ende (5) des Nabengehäuses (2) eine Standard-Bremsscheibenaufnahme (7) mit einer unrunden Außenkontur (7a) ausgebildet ist und wobei an dem Nabengehäuse (2) in einem axialen Bereich (7b) der Bremsscheibenaufnahme (7) eine Fixieraufnahme (8) mit einem Innengewinde (8a) ausgebildet ist und wobei an der Fixieraufnahme (8) ein Fixierring (9) zur axialen Fixierung der Bremsscheibe (111) angeordnet ist und wobei der Außendurchmesser (14a) des äußeren Anschlags (14) insbesondere größer ist als ein freier Innendurchmesser (9a) eines Standard-Fixierrings (9), wobei der Fixierring (9) ein Einschraubteil (9b) und wenigstens ein davon nach außen abstehendes Fixierelement (9c) zur axialen Fixierung der Bremsscheibe (111) umfasst.

5. Fahrradkomponente (1) nach einem der vorhergehenden Ansprüche, wobei sich die erste Anschlagkomponente (20) mittelbar über eine Kraftüberleitungskomponente (18) an der Lagereinrichtung (3) abstützt oder wobei sich die erste Anschlagkomponente (20) unmittelbar gegen die Lagereinrichtung (3) abstützt und insbesondere gegen einen inneren Lagerring (3b) der Lagereinrichtung (3).

6. Fahrradkomponente (1) nach einem der vorhergehenden Ansprüche, wobei die erste und die zweite Anschlagkomponente (20, 30) in dem Überlappungsabschnitt (21) wenigstens zwei gestufte Durchmesserabschnitte (22, 23; 32, 33) aufweisen.

7. Fahrradkomponente (1) nach dem vorhergehenden Anspruch, wobei zwischen der ersten und der zweiten Anschlagkomponente (20, 30) wenigstens ein Reibelement (31) wie ein O-Ring angeordnet ist, wobei das Reibelement (31) in einer Nut (34) in der zweiten Anschlagkomponente (30) angeordnet ist und/oder wobei das Reibelement (31) in einer Nut (24) der ersten Anschlagkomponente (20) angeordnet ist.

8. Fahrradkomponente (1) nach einem der vorhergehenden Ansprüche, wobei die erste Anschlagkomponente (20) einen rohrartigen Abschnitt (25) und wenigstens einen radialen Flansch (26) in einem Bereich (26a) an dem inneren Anschlag (11) aufweist.

9. Fahrradkomponente (1) nach einem der vorhergehenden Ansprüche, wobei die erste Anschlagkomponente (20) durch einen separaten Haltering (40) an dem Nabengehäuse (2) gesichert ist, wobei insbesondere der Haltering (40) wenigstens einen radial nach innen abstehenden Flansch (41) aufweist.

10. Endanschlag (10) für eine Nabe (108) eines wenigstens teilweise muskelbetriebenen Fahrrades (100),
umfassend eine erste Anschlagkomponente (20) mit einem inneren Anschlag (11) und einer wenigstens teilweise daran angeordneten inneren Anschlagfläche (12) und eine zweite Anschlagkomponente (30) mit einem äußeren Anschlag (13) und einer wenigstens teilweise daran angeordneten äußeren Anschlagfläche (14),
wobei die erste Anschlagkomponente (20) im Wesentlichen rohrartig ausgebildet ist,
und wobei die zweite Anschlagkomponente (30) rohrartig ausgebildet ist und einen nach außen abstehenden Flansch (36) aufweist, der den äußeren Anschlag (13) bildet, wobei sich die zweite Anschlagkomponente (30) und die erste Anschlagkomponente (20) abschnittweise radial umgeben und wobei die erste Anschlagkomponente (20) und die zweite Anschlagkomponente (30) über ein Reibelement (31) verliersicher zusammengehalten werden.

11. Endanschlag (10) nach dem vorhergehenden Anspruch, wobei die erste Anschlagkomponente (20) wenigstens einen nach außen abstehenden Flansch (26) aufweist oder wobei an der ersten Anschlagkomponente (20) ein nach außen abstehender Doppelflansch (27) ausgebildet ist, wobei insbesondere der Flansch (26) an der ersten Anschlagkomponente (20) benachbart zu dem inneren Anschlag (11) und beabstandet davon angeordnet ist.

12. Endanschlag nach einem der beiden vorhergehenden Ansprüche, wobei der Flansch (36) an der zweiten Anschlagkomponente (30) den äußeren Anschlag (13) mit der äußeren Anschlagfläche (14) bildet.

13. Endanschlag (10) nach einem der drei vorhergehenden Ansprüche, wobei die erste Anschlagkomponente (20) mindestens zwei Durchmesserabschnitte (32, 33) aufweist.

14. Endanschlag (10) nach einem der vier vorhergehenden Ansprüche, wobei die äußere Anschlagfläche (14) einen größeren Außendurchmesser (14a) aufweist als der Flansch (26) an der ersten Anschlagkomponente (20).

## Claims

1. Bicycle component (1) comprising a hub shell (2) for a wheel (101, 102) of an at least partially muscle-powered bicycle (100) wherein the hub shell (2) is rotatably supported by means of at least one bearing device (3, 4),
wherein an adapter unit (10, 60) is arranged on at least one end (5, 6) of the hub shell (2),
wherein the adapter unit (10, 60) comprises an inner stopper (11, 61) having an inner stop face (12, 62) for transferring a clamping force to the bearing device (3, 4) and an outer stopper (13, 63) with an outer stop face (14, 64) transmitting at least part of the clamping force,
**characterized in**
**that** the adapter unit (10, 60) comprises a first and at least one second stopper component (20, 30; 70, 80) transmitting the clamping force, wherein the second stopper component (30) radially surrounds the first stopper component (20) over at least an overlapping portion (21), and wherein the outer stopper (13) has a larger stop face (14) and/or a larger outer diameter (14a) than does the inner stopper (11).

2. The bicycle component (1) according to claim 1 wherein the outer stopper (13) has an outer diameter (14a) that is larger than a maximum outer diameter (3a) of the bearing device (3, 4) and/or than a maximum inner diameter (2a) of the hub shell (2).

3. The bicycle component (1) according to any of the preceding claims wherein the inner stopper (11) with the inner stop face (12) is configured on the first stopper component (20) and/or wherein the outer stopper (13) with the outer stop face (14) is configured on the second stopper component (30).

4. The bicycle component (1) according to any of the preceding claims wherein a standard brake disk accommodation (7) with a non-round outer contour (7a) is configured at one end (5) of the hub shell (2) and wherein a fixing accommodation (8) with an internal thread (8a) is configured on the hub shell (2) in an axial region (7b) of the brake disk accommodation (7) and wherein a fixing ring (9) is disposed on the fixing accommodation (8) for axially fixing the brake disk (111) and wherein the outer diameter (14a) of the outer stopper (14) is in particular larger than a clear inner diameter (9a) of a standard fixing ring (9), wherein the fixing ring (9) comprises a screw-in part (9b) and at least one fixing member (9c) protruding outwardly therefrom for axially fixing the brake disk (111).

5. The bicycle component (1) according to any of the preceding claims wherein the first stopper component (20) is indirectly supported on the bearing device (3) by means of a force transfer component (18) or wherein the first stopper component (20) rests immediately against the bearing device (3) and in particular against an inner bearing ring (3b) of the bearing device (3).

6. The bicycle component (1) according to any of the preceding claims wherein the first and second stopper components (20, 30) comprise at least two stepped diameter portions (22, 23; 32, 33) in the overlapping portion (21).

7. The bicycle component (1) according to the preceding claim wherein at least one friction member (31) such as an O-ring is disposed between the first and second stopper components (20, 30), wherein the friction member (31) is disposed in a groove (34) in the second stopper component (30) and/or wherein the friction member (31) is disposed in a groove (24) in the first stopper component (20).

8. The bicycle component (1) according to any of the preceding claims wherein the first stopper component (20) comprises a tubular portion (25) and at least one radial flange (26) in a region (26a) at the inner stopper (11).

9. The bicycle component (1) according to any of the preceding claims wherein the first stopper component (20) is secured on the hub shell (2) by a separate retaining ring (40) wherein in particular the retaining ring (40) comprises at least one flange (41) protruding radially inwardly.

10. Adapter unit (10) for a hub (108) of an at least partially muscle-powered bicycle (100) comprising a first stopper component (20) having an inner stopper (11) and an inner stop face (12) at least partially disposed thereat and a second stopper component (30) having an outer stopper (13) and an outer stop face (14) at least partially disposed thereat,
wherein the first stopper component (20) is substantially configured tubular,
and wherein the second stopper component (30) is configured tubular and comprises an outwardly protruding flange (36) forming the outer stopper (13), wherein the second stopper component (30) and the first stopper component (20) radially surround one another in portions and wherein the first stopper component (20) and the second stopper component (30) are held together secure against loss by means of a friction member (31).

11. The adapter unit (10) according to the preceding claim wherein the first stopper component (20) comprises at least one outwardly protruding flange (26) or wherein an outwardly protruding double flange (27) is formed at the first stopper component (20) wherein in particular the flange (26) is disposed at the first stopper component (20) adjacent to and spaced apart from the inner stopper (11).

12. The adapter unit according to any of the two preceding claims wherein the flange (36) at the second stopper component (30) forms the outer stopper (13) with the outer stop face (14).

13. The adapter unit (10) according to any of the three preceding claims wherein the first stopper component (20) comprises at least two diameter portions (32, 33).

14. The adapter unit (10) according to any of the four preceding claims wherein the outer stop face (14) has a larger outer diameter (14a) than does the flange (26) on the first stopper component (20).

## Revendications

1. Composant de bicyclette (1) comprenant un boîtier de moyeu (2) pour une roue (101, 102) d'une bicyclette (100) entraînée, au moins en partie, par force musculaire,
dans lequel le boîtier de moyeu (2) est monté de manière rotative par au moins un dispositif de support (3, 4),
dans lequel une butée d'extrémité (10, 60) est disposée à au moins une extrémité (5, 6) du boîtier de moyeu (2),
dans lequel la butée d'extrémité (10, 60) présente une butée intérieure (11, 61) ayant une surface de butée intérieure (12, 62) pour transmettre une force de serrage audit dispositif de support (3, 4) ainsi qu'une butée extérieure (13, 63) ayant une surface de butée extérieure (14, 64) et transmettant au moins une partie de la force de serrage, **caractérisé par le fait**
**que** la butée d'extrémité (10, 60) comprend un premier composant de butée et au moins un deuxième composant de butée (20, 30; 70, 80) transmettant la force de serrage, dans lequel le deuxième composant de butée (30) entoure radialement le premier composant de butée (20) sur au moins une section de chevauchement (21), et dans lequel la butée extérieure (13) présente une surface de butée (14) plus grande et/ou un diamètre extérieur (14a) plus grand que la butée intérieure (11).

2. Composant de bicyclette (1) selon la revendication 1, dans lequel la butée extérieure (13) présente un diamètre extérieur (14a) supérieur à un diamètre extérieur maximal (3a) du dispositif de support (3, 4) et/ou à un diamètre intérieur maximal (2a) du boîtier de moyeu (2).

3. Composant de bicyclette (1) selon l'une quelconque des revendications précédentes, dans lequel la butée intérieure (11) avec la surface de butée intérieure (12) est réalisée sur le premier composant de butée (20) et/ou dans lequel la butée extérieure (13) avec la surface de butée extérieure (14) est réalisée sur le deuxième composant de butée (30).

4. Composant de bicyclette (1) selon l'une quelconque des revendications précédentes, dans lequel à une extrémité (5) du boîtier de moyeu (2) est réalisé un logement de disque de frein (7) standard ayant un contour extérieur non rond (7a), et dans lequel un logement de fixation (8) ayant un filetage intérieur (8a) est réalisé sur le boîtier de moyeu (2) dans une zone axiale (7b) du logement de disque de frein (7), et dans lequel une bague de fixation (9) destinée à fixer axialement le disque de frein (111) est disposée sur le logement de fixation (8), et dans lequel le diamètre extérieur (14a) de la butée extérieure (14) est en particulier supérieur à un diamètre intérieur libre (9a) d'une bague de fixation (9) standard, dans lequel ladite bague de fixation (9) présente une partie à visser (9b) ainsi qu'au moins un élément de fixation (9c) faisant saille de celle-ci vers l'extérieur et destiné à fixer axialement le disque de frein (111).

5. Composant de bicyclette (1) selon l'une quelconque des revendications précédentes, dans lequel le premier composant de butée (20) s'appuie indirectement par un composant de transmission de force (18) sur ledit dispositif de support (3), ou dans lequel le premier composant de butée (20) s'appuie directement contre le dispositif de support (3) et en particulier contre une bague de support intérieure (3b) du dispositif de support (3).

6. Composant de bicyclette (1) selon l'une quelconque des revendications précédentes, dans lequel les premier et deuxième composants de butée (20, 30) présentent, dans la section de chevauchement (21), au moins deux sections de diamètre (22, 23; 32, 33) étagées.

7. Composant de bicyclette (1) selon la revendication précédente, dans lequel au moins un élément de friction (31), tel qu'un joint torique, est disposé entre les premier et deuxième composants de butée (20, 30), dans lequel ledit élément de friction (31) est disposé dans une rainure (34) dans le deuxième composant de butée (30), et/ou dans lequel l'élément de friction (31) est disposé dans une rainure (24) du premier composant de butée (20).

8. Composant de bicyclette (1) selon l'une quelconque des revendications précédentes, dans lequel le premier composant de butée (20) présente une section tubulaire (25) et au moins un flasque radial (26) dans une zone (26a) sur la butée intérieure (11).

9. Composant de bicyclette (1) selon l'une quelconque des revendications précédentes, dans lequel le premier composant de butée (20) est sécurisé sur le boîtier de moyeu (2) par le biais d'une bague de retenue (40) séparée, dans lequel, en particulier, ladite bague de retenue (40) présente au moins un flasque (41) faisant saillie radialement vers l'intérieur.

10. Butée d'extrémité (10) pour un moyeu (108) d'une bicyclette (100) entraînée, au moins en partie, par force musculaire,
comprenant un premier composant de butée (20) ayant une butée intérieure (11) et une surface de butée (12) intérieure agencée au moins en partie sur celle-ci ainsi qu'un deuxième composant de butée (30) ayant une butée extérieure (13) et une surface de butée (14) extérieure agencée au moins en partie sur celle-ci,
dans laquelle le premier composant de butée (20) est conçu de manière pour l'essentiel tubulaire,
et dans laquelle le deuxième composant de butée (30) est conçu de façon tubulaire et présente un flasque (36) faisant saillie vers l'extérieur qui forme la butée extérieure (13), dans laquelle le deuxième composant de butée (30) et le premier composant de butée (20) s'entourent radialement par sections, et dans laquelle le premier composant de butée (20) et le deuxième composant de butée (30) sont maintenus ensemble de manière imperdable par l'intermédiaire d'un élément de friction (31).

11. Butée d'extrémité (10) selon la revendication précédente, dans laquelle le premier composant de butée (20) comprend au moins un flasque (26) faisant saillie vers l'extérieur, ou dans laquelle un double flasque (27) faisant saillie vers l'extérieur est réalisé sur le premier composant de butée (20), en particulier le flasque (26) sur le premier composant de butée (20) étant disposé de manière adjacente à la butée intérieure (11) et espacée de celle-ci.

12. Butée d'extrémité selon l'une quelconque des deux revendications précédentes, dans laquelle le flasque (36) sur le deuxième composant de butée (30) forme la butée extérieure (13) avec la surface de butée (14) extérieure.

13. Butée d'extrémité (10) selon l'une quelconque des trois revendications précédentes, dans laquelle le premier composant de butée (20) présente au moins deux sections de diamètre (32, 33).

14. Butée d'extrémité (10) selon l'une quelconque des quatre revendications précédentes, dans laquelle la surface de butée (14) extérieure présente un diamètre extérieur (14a) supérieur à celui du flasque (26) sur le premier composant de butée (20).
